(19) Europäisches Patentamt
European Patent Office
Office européen des brevets

(11) EP 1 988 114 A1

(12) **EUROPEAN PATENT APPLICATION**
published in accordance with Art. 158(3) EPC

(43) Date of publication:
**05.11.2008 Bulletin 2008/45**

(21) Application number: **07714622.3**

(22) Date of filing: **14.02.2007**

(51) Int Cl.:
***C08G 69/48** (2006.01)*

(86) International application number:
**PCT/JP2007/053122**

(87) International publication number:
**WO 2007/094503 (23.08.2007 Gazette 2007/34)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.02.2006 JP 2006039489**

(71) Applicant: **TEIJIN LIMITED**
**Osaka-shi,**
**Osaka 541-0054 (JP)**

(72) Inventors:
- **CHOKAI, Masayuki**
**Iwakuni-shi, Yamaguchi 740-0014 (JP)**
- **DE WEIJER, Anton Peter**
**Iwakuni-shi, Yamaguchi 740-0014 (JP)**
- **KUWAHARA, Hiroaki**
**Iwakuni-shi, Yamaguchi 740-0014 (JP)**
- **DINGEMANS, Theo**
**2331 LZ Leiden (NL)**

(74) Representative: **Heimann, Anette**
**CPW GmbH,**
**Kasinostrasse 19-21**
**42103 Wuppertal (DE)**

(54) **POLYAMIDE**

(57) There are provided fibers having excellent mechanical strength such as tensile strength and elastic modulus and a polyamide that is a raw material of the fibers. The polyamide is a polyamide (X) which mainly comprises recurring units represented by the following formulae (A) and (B):

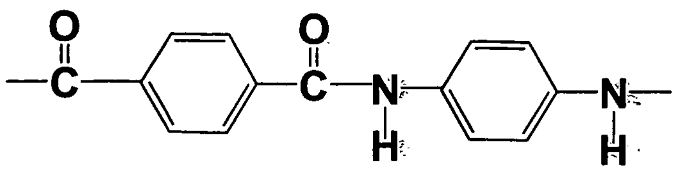

(A)

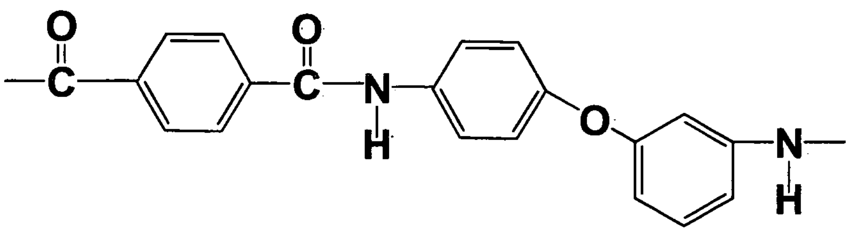

(B)

has an inherent viscosity measured at 30°C in 0.5 g/100 ml of concentrated sulfuric acid solution of 0.05 to 20 dl/g and has a substituent represented by the following formula (C):

EP 1 988 114 A1

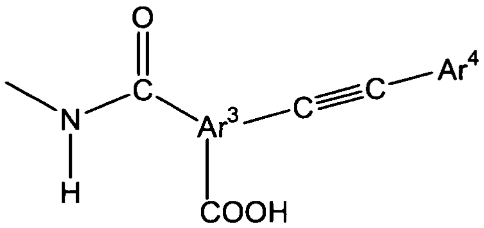

(C)

wherein $Ar^3$ is a trivalent aromatic hydrocarbon group having 6 to 20 carbon atoms, and $Ar^4$ is a monovalent aromatic hydrocarbon group having 6 to 20 carbon atoms,
at at least some of terminals, and the fibers are fibers formed from the polyamide (X).

## Description

Field of the Invention

This invention relates to a polyamide having a specific terminal group, a resin composition and fibers.

Background Art

A wholly aromatic polyamide is a material having a structure formed by connecting rigid aromatic rings together and having excellent heat resistance, mechanical properties, chemical resistance and the like. Accordingly, it is widely used, in the form of fibers or a film, in electrical insulating materials, various reinforcing agents, bulletproof fibers and the like. Although the wholly aromatic polyamide is one of industrially highly valuable materials, it has been increasingly required to have higher properties according to applications in which it is used.

A measure for improving the physical properties of polymer is a method of introducing a cross-link between molecules by a chemical reaction. However, when the polymer is cross-linked, its solubility in solvent is lowered, and the polymer becomes difficult to be formed into fibers, a film or the like. Thus, a method comprising adding a cross-linking agent to a polymer solution in advance and causing the polymer to react and be cross-linked at the time of heat treatment and heat stretching has been proposed.

Nonpatent Document 1 proposes introducing halogen atoms into a polybenzobisthiazole molecular chain and introducing intermolecular bonds by radicals produced at the time of heat treatment.

(Nonpatent Document 1) Journal of Polymer Science: Part A: Polymer Chemistry, vol. 30, 1111 to 1122 (1992)

Disclosure of the Invention

Thus, an object of the present invention is to provide fibers having excellent heat resistance and excellent mechanical strength such as tensile strength and elastic modulus by introducing a cross-linked structure into a wholly aromatic polyamide. Another object of the present invention is to provide a wholly aromatic polyamide which is used as a raw material of the fibers and a resin composition comprising the wholly aromatic polyamide. Still another object of the present invention is to provide a method for producing fibers having excellent heat resistance and excellent mechanical strength such as tensile strength and elastic modulus.

The present inventor has made intensive studies on a method for introducing a cross-linked structure into a wholly aromatic polyamide. As a result, he has found that when a terminal of the wholly aromatic polyamide is modified with a compound having a specific structure and heat-treated, the terminal is reacted, and a cross-linked structure is formed. Further, he has also found that the moldability of the terminal-modified wholly aromatic polyamide before the heat treatment is good. Further, he has also found that fibers having excellent mechanical strength are obtained by cross-linking. The present invention has been completed based on these findings.

That is, the present invention includes a polyamide (X) which mainly comprises recurring units represented by the following formulae (A) and (B):

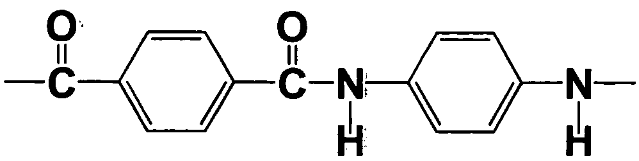

(A)

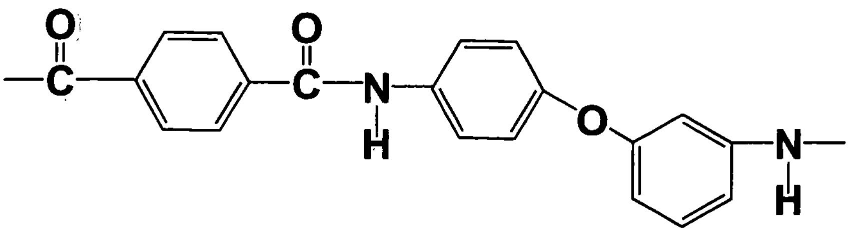

(B)

has an inherent viscosity measured at 30°C in 0.5 g/100 ml of concentrated sulfuric acid solution of 0.05 to 20 dl/g and

has a substituent represented by the following formula (C):

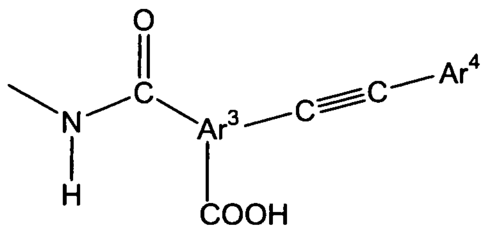

(C)

wherein $Ar^3$ is a trivalent aromatic hydrocarbon group having 6 to 20 carbon atoms, and $Ar^4$ is a monovalent aromatic hydrocarbon group having 6 to 20 carbon atoms, at at least some of terminals.

Further, the present invention includes a resin composition (Z) comprising:

(i) 100 parts by weight of polyamide (Y) that mainly comprises recurring units represented by the following formulae (A) and (B):

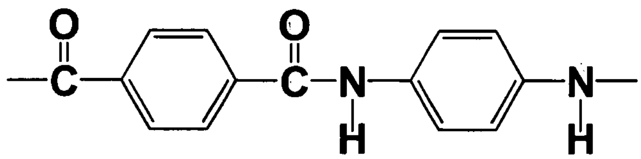

(A)

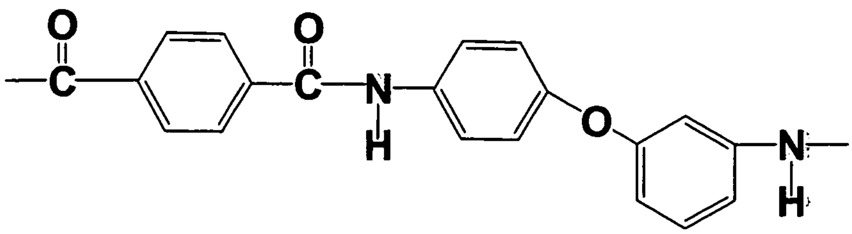

(B)

and has an inherent viscosity measured at 30°C in 0.5 g/100 ml of concentrated sulfuric acid solution of 0.05 to 20 dl/g, and

(ii) 0.0001 to 100 parts by weight of the polyamide (X).

The present invention includes fibers comprising the polyamide (X) and fibers comprising the resin composition (Z).

The present invention includes dope (X) comprising 100 parts by weight of the polyamide (X) and 300 to 3,000 parts by weight of solvent. Further, the present invention includes dope (Z) comprising 100 parts by weight of the resin composition (Z) and 300 to 3,000 parts by weight of solvent. Further, the present invention includes a method for producing fibers by spinning the dope (X) or dope (Z).

Best Mode for Carrying out the Invention

(Polyamide (X))

The polyamide (X) of the present invention mainly comprises recurring units represented by the following formulae (A) and (B). That is, the polyamide (X) comprises preferably 80 to 100 mol%, more preferably 90 to 100 mol% of the recurring units represented by the formulae (A) and (B) in all recurring units.

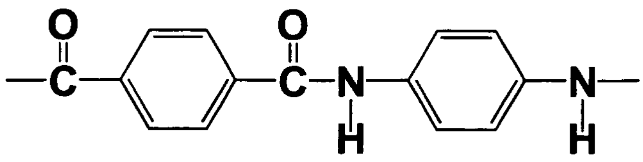

(A)

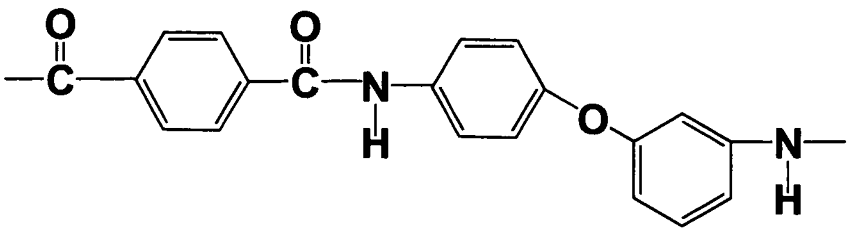

(B)

The proportion of the recurring unit represented by the formula (A) in the polyamide (X) is preferably 40 to 60 mol%, more preferably 45 to 55 mol%. The proportion of the recurring unit represented by the formula (B) in the polyamide (X) is preferably 60 to 40 mol%, more preferably 55 to 45 ml%. The recurring units of the formulae (A) and (B) exist randomly in the polyamide (X). The molar ratio {(A)/(B)} of the recurring units represented by the formulae (A) and (B) in the polyamide (X) is preferably 1/0.8 to 1/1.2, more preferably 1/0.9 to 1/1.1.

The polyamide (X) may comprise the other recurring units other than the formulae (A) and (B). The other recurring units include recurring units constituted by the following formulae (D) and (E). They constitute preferably 0 to 20 mol%, more preferably 0 to 10 mol% of all recurring units.

$$-OC-Ar^1-CO- \quad (D)$$

$$-NH-Ar^2-NH- \quad (E)$$

In the formula (D), $Ar^1$ is at least one group selected from a p-phenylene group and an m-phenylene group. In the formula (E), $Ar^2$ is at least one group selected from a p-phenylene group, an m-phenylene group, a 3,4'-diphenylene ether group and a 4,4'-diphenylene ether group.

The polyamide (X) can be produced by polymerizing diamine components represented by the following formulae (a-1) and (a-2), a dicarboxylic acid component represented by the following formula (b) and/or its acid anhydride. The polymerization may be carried out by a conventionally known method such as solution polymerization, interfacial polymerization or melt polymerization.

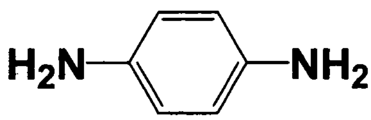

(a-1)

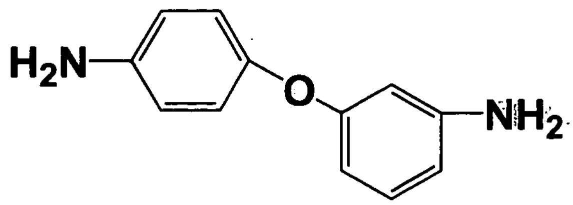

(a-2)

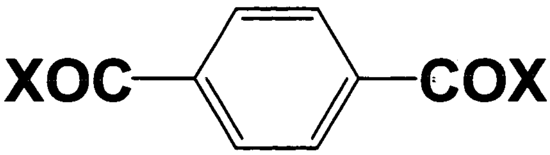

(b)

In the formula (b), X represents OH, a halogen atom or a group represented by OR. R represents an aliphatic hydrocarbon group having 1 to 6 carbon atoms or an aromatic hydrocarbon group having 6 to 12 carbon atoms.

The degree of polymerization can be controlled by the ratio of the diamine components to the dicarboxylic acid component. A preferred composition ratio is as follows.

$$0.8 \leq (\alpha)/\{(\beta) + (\gamma)\} \leq 1.2$$

$$0 < (\gamma)/(\beta) \leq 1.0$$

wherein ($\alpha$) represents the number of moles of the diamine components (a-1) and (a-2), ($\beta$) represents the number of moles of the dicarboxylic acid component (b), and ($\gamma$) represents the number of moles of the acid anhydride component (c).

The polyamide (X) has an inherent viscosity $\eta_{inh}$ of 0.05 to 20 dl/g, preferably 0.1 to 5 dl/g, more preferably 0.5 to 2 dl/g. The inherent viscosity $\eta_{inh}$ is obtained by measuring a solution prepared by dissolving the polyamide (X) in 98-wt% concentrated sulfuric acid at a concentration of 0.5 g/100 ml at 30°C.

The polyamide (X) of the present invention has a substituent represented by the following formula (C) at at least some of terminal groups.

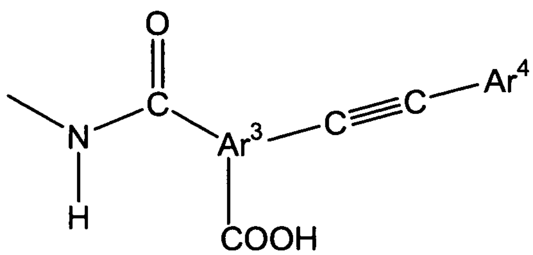

(C)

In the formula (C), $Ar^3$ is a trivalent aromatic hydrocarbon group having 6 to 20 carbon atoms, and $Ar^4$ is a monovalent aromatic hydrocarbon group having 6 to 20 carbon atoms.

Illustrative examples of the trivalent aromatic hydrocarbon group $Ar^3$ include groups having a benzene ring or a naphthalene ring. Specific examples thereof include a benzene-triyl group, a toluene-triyl group, a xylene-triyl group, an ethylbenzene-triyl group, and a naphthalene-triyl group.

Illustrative examples of the monovalent aromatic hydrocarbon group $Ar^4$ include a phenyl group and a naphthyl group.

$Ar^3$ and $Ar^4$ may have a substituent. Illustrative examples of the substituent include halogen groups such as fluorine, chlorine and bromine; alkyl groups having 1 to 6 carbon atoms such as a methyl group, ethyl group, propyl group and hexyl group; cycloalkyl groups having 5 to 10 carbon atoms such as a cyclopentyl group and cyclohexyl group; and aromatic groups having 6 to 10 carbon atoms such as a phenyl group.

In particular, $Ar^3$ is preferably a benzene-triyl group, and $Ar^4$ is preferably a phenyl group.

The terminal group represented by the formula (C) is preferably

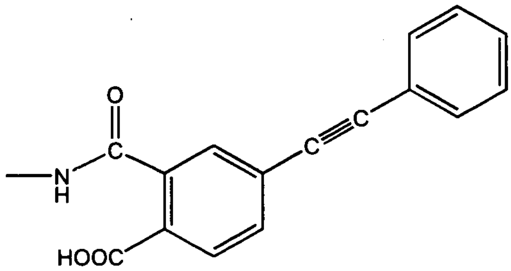

or

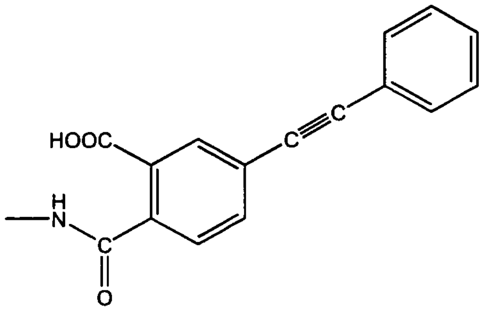

The concentration of the terminal group represented by the formula (C) in the polyamide (X) is preferably 0.05 to 1,500 eq/ton, more preferably 10 to 1,000 eq/ton, much more preferably 100 to 240 eq/ton. The terminal group concentration can be determined from proton NMR analysis of polyamide dope.
The polyamide (X) preferably has an inherent viscosity of 0.5 to 2 dl/g and a concentration of the terminal group represented by the formula (C) of 100 to 240 eq/ton.
Since the polyamide (X) has the terminal group represented by the formula (C), the terminal group represented by the formula (C) is reacted by heating and a cross-linked structure is formed in the polyamide, whereby the mechanical strength of the polyamide is improved. Since the terminal group represented by the formula (C) does not form the cross-linked structure before heating, the polyamide (X) can be easily formed into fibers, a film or the like.

(Resin Composition)

The resin composition (Z) of the present invention comprises a polyamide (X) and a polyamide (Y). The polyamide (X) is as described above.
The polyamide (Y) mainly comprises recurring units represented by the following formulae (A) and (B) . That is, the polyamide (Y) comprises preferably 80 to 100 mol%, more preferably 90 to 100 mol% of the recurring units represented by the formulae (A) and (B) in all recurring units.

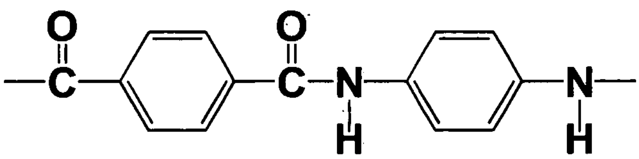

(A)

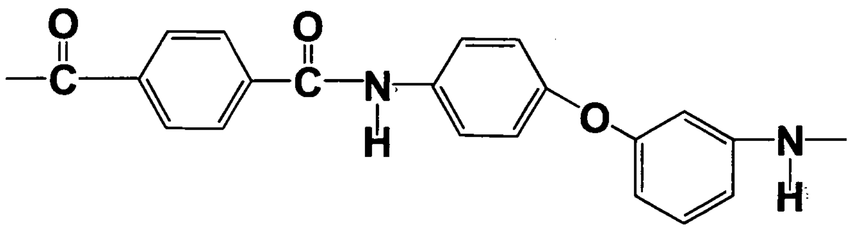

(B)

The proportion of the recurring unit represented by the formula (A) in the polyamide (Y) is preferably 40 to 60 mol%, more preferably 45 to 55 mol%. The proportion of the recurring unit represented by the formula (B) in the polyamide (Y) is preferably 60 to 40 mol%, more preferably 55 to 45 mol%. The recurring units of the formulae (A) and (B) exist randomly in the polyamide (Y). The molar ratio {(A)/(B)} of the recurring units represented by the formulae (A) and (B) in the polyamide (Y) is preferably 1/0.8 to 1/1.2, more preferably 1/0.9 to 1/1.1.

The polyamide (Y) may comprise recurring units other than the formulae (A) and (B). The other recurring units include recurring units constituted by the following formulae (D) and (E). They constitute preferably 0 to 20 mol%, more preferably 0 to 10 mol% of all recurring units.

$-OC-Ar^1-CO-$ (D)

$-NH-Ar^2-NH-$ (E)

In the formula (D), $Ar^1$ is at least one group selected from a p-phenylene group and an m-phenylene group. In the formula (E), $Ar^2$ is at least one group selected from a p-phenylene group, an m-phenylene group, a 3,4'-diphenylene ether group and a 4,4'-diphenylene ether group.

The polyamide (Y) can be produced by polymerizing diamine components represented by the following formulae (a-1) and (a-2), a dicarboxylic acid component represented by the following formula (b) and/or its acid anhydride. The polymerization may be carried out by a conventionally known method such as solution polymerization, interfacial polymerization or melt polymerization.

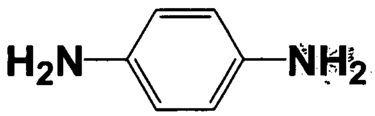

(a-1)

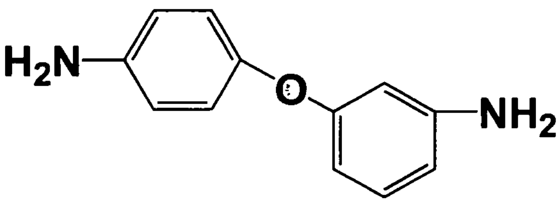

(a-2)

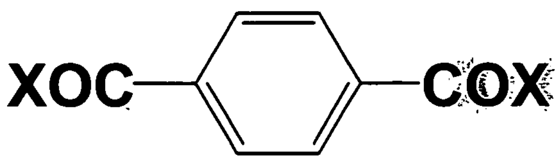

(b)

In the formula (b) , X represents OH, a halogen atom or a group represented by OR. R represents an aliphatic hydrocarbon group having 1 to 6 carbon atoms or an aromatic hydrocarbon group having 6 to 12 carbon atoms.

The degree of polymerization can be controlled by the ratio of the diamine components to the dicarboxylic acid component. A preferred composition ratio is as follows.

$$0.8 \le (\alpha)/\{(\beta) + (\gamma)\} \le 1.2$$

$$0 < (\gamma)/(\beta) \le 1.0$$

wherein ($\alpha$) represents the number of moles of the aromatic diamine components (a-1) and (a-2), ($\beta$) represents the number of moles of the aromatic dicarboxylic acid component (b) , and ($\gamma$) represents the number of moles of the acid anhydride component (c).

The polyamide (Y) has an inherent viscosity $\eta_{inh}$ of 0.05 to 20 dl/g, preferably 1 to 20 dl/g, more preferably 1 to 10 dl/g. The inherent viscosity $\eta_{inh}$ is obtained by measuring a solution prepared by dissolving the polyamide (Y) in 98-wt% concentrated sulfuric acid at a concentration of 0.5 g/100 ml at 30°C.

The content of the polyamide (X) in the resin composition (Z) is 0.0001 to 100 parts by weight, preferably 0.0001 to 30 parts by weight, more preferably 0.001 to 20 parts by weight, much more preferably 0.01 to 15 parts by weight, based on 100 parts by weight of the polyamide (Y).

The concentration of the terminal group represented by the formula (C) in the resin composition (Z) is preferably 0.05 to 240 eq/ton, more preferably 1 to 50 eq/ton.

The resin composition (Z) can be prepared by a method such as 1) adding the polyamide (X) to the polyamide (Y), 2) mixing the polyamide (Y) with the polyamide (X), 3) adding the polyamide (Y) to the polyamide (X), or 4) carrying out in-situ polymerization of the polyamide (Y) with a solution of the polyamide (X).

(Dope)

The dope (X) of the present invention comprises 100 parts by weight of the polyamide (X) and 300 to 3, 000 parts by weight, preferably 500 to 2,500 parts by weight, more preferably 1,000 to 2,000 parts by weight of solvent. The dope (Z) of the present invention comprises 100 parts by weight of the resin composition (Z) and 300 to 3,000 parts by weight, preferably 500 to 2,500 parts by weight, more preferably 1,000 to 2,000 parts by weight of solvent.

Illustrative examples of the solvents include amide solvents such as dimethylacetamide and N-methyl-2-pyrrolidone, and acid solvents such as 100% sulfuric acid, phosphoric acid, polyphosphoric acid and methanesulfonic acid. The dope can be prepared by mixing the polyamide (X) or resin composition (Z) with the solvent. Further, the dope can also be obtained directly by carrying out a polymerization reaction of the polyamide in the presence of the solvent.

(Fibers)

The present invention includes fibers comprising the polyamide (X). Further, the present invention includes fibers comprising the resin composition (Z) .

The strength of the fibers is preferably 20 to 40 CN/dtx, more preferably 22 to 35 CN/dtx. The concentration of the terminal group represented by the formula (C) in the fibers is preferably 0.05 to 240 eq/ton, more preferably 1 to 50 eq/ton.

The molar ratio {(A)/(B)} of the recurring units represented by the formulae (A) and (B) in the fibers is preferably 1/0.8 to 1/1.2, more preferably 1/0.9 to 1/1.1.

(Production Method of Fibers)

The fibers can be produced by spinning the dope (X) or dope (Z).

Spinning can be carried out by wet spinning, dry spinning or a combination of these methods. As described above, by carrying out flow orientation, liquid-crystal orientation, shear orientation or draw orientation in the spinning step, the orientation of the polyamide can be enhanced and mechanical properties can be improved.

After spinning, a heat treatment is preferably carried out. By the heat treatment, the polyamide can be crosslinked. The temperature at the time of the heat treatment is preferably 100 to 800°C, more preferably 200 to 600°C. It is preferable to apply tension to the fibers at the time of the heat treatment. The tension is preferably 1 to 95%, more preferably 3 to 50%, much more preferably 5 to 30% of fiber rupture strength.

At the time of the heat treatment, the fibers may be drawn. The draw ratio is preferably 2 to 40 times, more preferably 5 to 30 times. The draw ratio is desirably as close to the maximum draw ratio (MDR) as possible from the viewpoints of mechanical and physical properties. The draw temperature is preferably 100 to 800°C, more preferably 200 to 600°C. By drawing and orienting the fibers at high temperatures and a high draw ratio, the fibers having excellent

mechanical properties can be obtained.

Examples

Hereinafter, the present invention will be further described with reference to examples. However, the present invention shall not be limited by these examples in any way.

(1) Inherent Viscosity of Polyamide
This was measured at 30°C in 0.5 g/100 ml of concentrated sulfuric acid (98 wt%) solution.
(2) Concentration of Terminal Group
This was determined from proton NMR analysis of polymer dope by use of JEOL A-600 (600 MHz) of JEOL Ltd.
(3) Mechanical Properties of Fibers
An obtained single fiber was subjected to a tensile test by use of TENSILON universal tester 1225A of ORIENTEC CO., LTD to determine a modulus of elongation and tensile strength.

Reference Example 1 Preparation of Polyamide (Y)

To a fully dried three-neck flask equipped with an agitator, 2,152 parts by weight of dehydrated and purified N-methyl-2-pyrrolidone (NMP), 27.04 parts by weight of p-phenylenediamine and 50.06 parts by weight of 3,4'-diaminodiphenyl ether were added at room temperature and dissolved in nitrogen. Then, the mixture was cooled by ice, and 101.51 parts by weight of terephthalic acid dichloride was added to the mixture under agitation. Thereafter, the mixture was gradually heated and eventually reacted at 80°C for 60 minutes, and 37.04 parts by weight of calcium hydroxide was then added to carry out a neutralization reaction, thereby obtaining dope containing a polyamide (Y). The dope contained 1,513 parts by weight of NMP based on 100 parts by weight of the polyamide (Y). A portion of the dope was reprecipitated in water to obtain the polyamide (Y). The polyamide (Y) had an inherent viscosity of 3.5 dl/g and a molar ratio (A)/(B) of 50/50.

Example 1 Terminal-Group-Modified Polyamide (X)

To a fully dried three-neck flask equipped with an agitator, 210 parts by weight of dehydrated and purified NMP, 5. 4 parts by weight of p-phenylenediamine and 10 parts by weight of 3,4'-diaminodiphenyl ether were added at room temperature and dissolved in nitrogen. Then, the mixture was cooled by ice, and 20.3 parts by weight of terephthalic acid dichloride and 1.46 parts by weight of 4-phenylethynyl phthalic anhydride represented by the following formula (1):

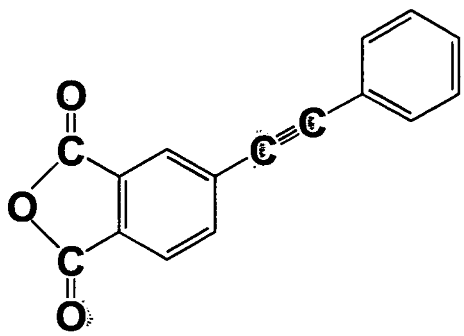

(1)

were added to the mixture under agitation. Thereafter, the mixture was gradually heated and eventually reacted at 80°C for 60 minutes, and 7.4 parts by weight of calcium hydroxide was then added to carry out a neutralization reaction, thereby obtaining dope containing a polyamide (X). The dope contained 739 parts by weight of NMP based on 100 parts by weight of the polyamide (X). The dope was reprecipitated in water to obtain the polyamide (X) . The polyamide (X) had an inherent viscosity of 0.665 dl/g and a molar ratio (A)/(B) of 50/50. The concentration of terminal group derived from the formula (1) was 183 eq/ton.

Example 2

(Preparation of Resin Composition)

To 300 parts by weight of the dope of the polyamide (Y) prepared in Reference Example 1, 21 parts by weight of the dope of the terminal-group-modified polyamide (X) prepared in Example 1 was added, and the mixture was agitated at a temperature of 70°C for 4 hours to obtain mixed dope having a polyamide (Y) /polyamide (X) of 88.5/11.5 (weight ratio). The amount of NMP was 1,425 parts by weight based on 100 parts by weight of the total amount of the polyamide (Y) and the polyamide (X) in the mixed dope. The concentration of terminal group derived from the formula (1) was 12 eq/ton based on the total amount of the polyamide (Y) and the polyamide (X).

(Production of Fibers)

The obtained mixed dope was spun into a coagulation bath of 50°C which was a 30-wt% NMP aqueous solution at a rate of 3 m/min and a cylinder temperature of 30°C by means of a cap having 5 openings each having a diameter of 0.3 mm and an L/D of 1. The distance between the surface of the cap and the surface of the coagulation bath was 10 mm. Fibers taken out of the coagulation bath were rinsed in a water bath of 50°C, dried by a drying roller of 200°C, and then drawn on a hot plate of 500°C. The maximum draw ratio (MDR) in this drawing step was determined in advance, and the fibers were drawn at a draw ratio of 13 times that was 0.8 times the MDR to obtain fibers. The tensile strength of the obtained fibers was 24.8 cN/dtex.
The tensile strength of the obtained fibers after the fibers were heat-treated at 400°C for 5 minutes under a tension of 2.2 cN/dtex was 22.82 cN/dtex. Further, the tensile strength of the obtained fibers after the fibers were heat-treated at 450°C for 5 minutes under a tension of 2.2 cN/dtex was 23.8 cN/dtex.

Comparative Example 1

300 parts by weight of the polyamide dope prepared in Reference Example 1 was spun in the same manner as in Example 1 to obtain fibers. Various physical properties of the fibers are shown in Table 1. The tensile strength of the obtained fibers was 24.55 cN/dtex. The obtained fibers were heat-treated at 400°C for 3 minutes under a tension of 2.2 cN/dtex. The tensile strength of the fibers after the heat treatment was 17.19 cN/dtex. The obtained fibers were heat-treated at 400°C for 5 minutes under a tension of 2.2 cN/dtex. The tensile strength of the fibers after the heat treatment was 15.8 cN/dtex. The obtained fibers were heat-treated at 450°C for 5 minutes under a tension of 2.2 cN/dtex, but the fibers were broken during the heat treatment and mechanical properties could not be measured accordingly.

Table 1

| | | Temperature (°C) | Time (min) | Elastic Modulus (cN/dtex) | Tensile Strength (cN/dtex) |
|---|---|---|---|---|---|
| Example 2 | Spun Fibers | - | - | - | 24.80 |
| | Heat Treatment | 400 | 5 | 2.2 | 22.82 |
| | Heat Treatment | 450 | 5 | 2.2 | 23.80 |
| Comparative Example 1 | Spun Fibers | - | - | - | 24.55 |
| | Heat Treatment | 400 | 3 | 2.2 | 17.19 |
| | Heat Treatment | 400 | 5 | 2.2 | 15.80 |
| | Heat Treatment | 450 | 5 | 2.2 | Broken during Heat Treatment |

<u>Effect of the Invention</u>

The polyamide (X) of the present invention has terminals modified with a compound having a specific structure. Accordingly, the polyamide (X) can be easily molded into such a form as fibers, and by heat-treating the polyamide (X) after molding, a cross-linked structure can be introduced into the polyamide (X). As a result, fibers having excellent mechanical strength can be obtained. The fibers of the present invention have excellent heat resistance and excellent mechanical strength such as tensile strength and elastic modulus. Further, the resin composition of the present invention can be used as a raw material of fibers having excellent mechanical strength. Further, according to the production

method of the present invention, fibers having excellent mechanical strength such as tensile strength and elastic modulus can be produced.

Industrial Applicability

The fibers of the present invention have excellent heat resistance and mechanical properties. Thus, they can be used in a wide variety of fields such as ropes, belts, insulation cloths, reinforcing materials for thermosetting or thermoplastic resins, and protective clothing materials.

## Claims

1. A polyamide (X) which mainly comprises recurring units represented by the following formulae (A) and (B):

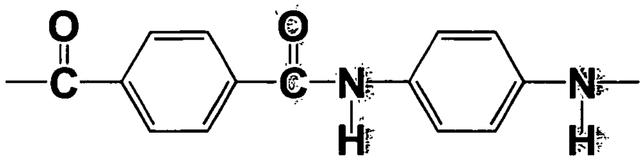
(A)

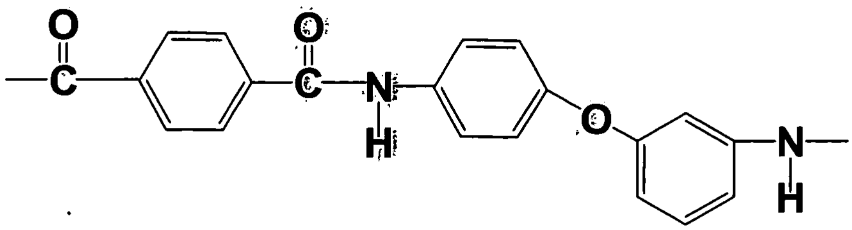
(B)

has an inherent viscosity measured at 30°C in 0.5 g/100 ml of concentrated sulfuric acid solution of 0.05 to 20 dl/g and has a substituent represented by the following formula (C):

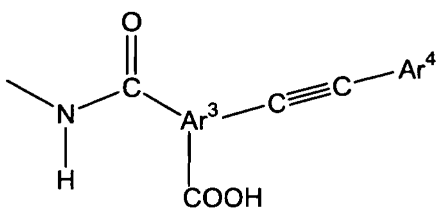
(C)

wherein $Ar^3$ is a trivalent aromatic hydrocarbon group having 6 to 20 carbon atoms, and $Ar^4$ is a monovalent aromatic hydrocarbon group having 6 to 20 carbon atoms, at at least some of terminals.

2. The polyamide of claim 1, wherein the molar ratio {(A)/(B)} of the recurring units represented by the formulae (A) and (B) is 1/0.8 to 1/1.2.

3. The polyamide of claim 1, wherein in the formula (C), $Ar^3$ is a benzene-triyl group, and $Ar^4$ is a phenyl group.

4. The polyamide of claim 1, wherein the concentration of the terminal group represented by the formula (C) is 0.05 to 1,500 eq/ton.

5. The polyamide of claim 1, wherein the inherent viscosity is 0.5 to 2 dl/g, and the concentration of the terminal group represented by the formula (C) is 100 to 240 eq/ton.

6. A resin composition (Z) comprising:

(i) 100 parts by weight of polyamide (Y) that mainly comprises recurring units represented by the following formulae (A) and (B):

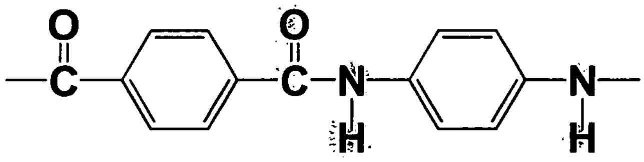

(A)

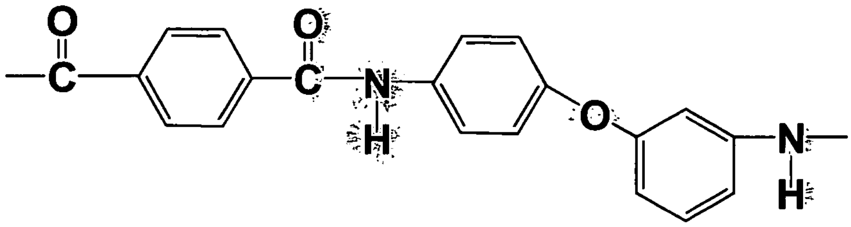

(B)

and has an inherent viscosity measured at 30°C in 0.5 g/100 ml of concentrated sulfuric acid solution of 0.05 to 20 dl/g, and

(ii) 0.0001 to 100 parts by weight of polyamide (X) that mainly comprises recurring units represented by the formulae (A) and (B), has an inherent viscosity measured at 30°C in 0.5 g/100 ml of concentrated sulfuric acid solution of 0.05 to 20 dl/g and has a substituent represented by the following formula (C):

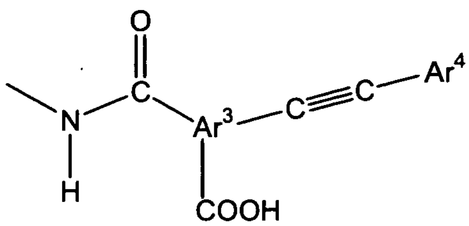

(C)

wherein $Ar^3$ is a trivalent aromatic hydrocarbon group having 6 to 20 carbon atoms, and $Ar^4$ is a monovalent aromatic hydrocarbon group having 6 to 20 carbon atoms, at at least some of terminals.

**7.** The resin composition of claim 6, wherein the concentration of the terminal group represented by the formula (C) is 0.05 to 240 eq/ton.

**8.** Dope (X) comprising 100 parts by weight of the polyamide of claim 1 and 300 to 3,000 parts by weight of solvent.

**9.** Dope (Z) comprising 100 parts by weight of the resin composition of claim 6 and 300 to 3,000 parts by weight of solvent.

**10.** A method for producing fibers by spinning the dope of claim 8 or 9.

**11.** The production method of claim 10, wherein a heat treatment is carried out after spinning.

**12.** Fibers comprising the polyamide (X) of claim 1.

**13.** Fibers comprising the resin composition (Z) of claim 6.

**14.** The fibers of claim 12 or 13, wherein the concentration of the terminal group represented by the formula (C) in the polyamide is 1 to 50 eq/ton.

**15.** The fibers of claim 12 or 13, wherein the molar ratio {(A)/(B)} of the recurring units represented by the formulae (A) and (B) in the polyamide is 1/0.8 to 1/1.2.

**16.** The fibers of claim 12 or 13, having a strength of 20 to 40 CN/dtx.

**INTERNATIONAL SEARCH REPORT**

International application No.
PCT/JP2007/053122

A. CLASSIFICATION OF SUBJECT MATTER
*C08G69/48*(2006.01)i, *C08G69/32*(2006.01)i, *D01F6/60*(2006.01)i, *D01F6/80*(2006.01)i

According to International Patent Classification (IPC) or to both national classification and IPC

B. FIELDS SEARCHED

Minimum documentation searched (classification system followed by classification symbols)
C08G69/00-69/50, D01F6/60, D01F6/80

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 63-146930 A (Asahi Chemical Industry Co., Ltd.), 18 June, 1988 (18.06.88), Claims; page 1, lower right column, line 17 to page 2, upper left column, line 17; page 3, upper left column, lines 9 to 12; page 4, upper left column, line 20 to lower left column, line 11; page 6, tables (Family: none) | 1-16 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 April, 2007 (23.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/053122

C (Continuation). DOCUMENTS CONSIDERED TO BE RELEVANT

| Category* | Citation of document, with indication, where appropriate, of the relevant passages | Relevant to claim No. |
|---|---|---|
| A | JP 3-166211 A (Showa Highpolymer Co., Ltd.), 18 July, 1991 (18.07.91), Claims; page 1, lower right column, lines 1 to 3; page 1, lower right column, lines 9 to 13; page 2, upper right column, line 12 to lower left column, line 17; page 3, upper left column, line 13 to upper right column, line 13; page 4, lower right column, lines 1 to 6; page 5, lower left column, lines 3 to 20<br>(Family: none) | 1-16 |
| A | JP 64-9967 A (The Boeing Co.), 13 January, 1989 (13.01.89), Claims; page 10, lower right column, lines 5 to 13; page 20, lower left column, lines 4 to 14<br>& US 4847333 A & US 5109105 A<br>& US 4876328 A & EP 0294555 A2<br>& EP 0292677 A2 & IL 86318 A<br>& IL 86317 A & CA 1319214 A | 1-16 |
| A | JP 63-305165 A (The Boeing Co.), 13 December, 1988 (13.12.88), Claims; page 9, lower left column, line 20 to page 10, lower left column, line 7; page 12, lower right column, line 19 to page 13, lower left column, line 6<br>& US 4847333 A & US 5109105 A<br>& US 4876328 A & EP 0294555 A2<br>& EP 0292677 A2 & IL 86318 A<br>& IL 86317 A & CA 1319214 A | 1-16 |
| A | JP 63-196564 A (Director General, Agency of Industrial Science and Technology), 15 August, 1988 (15.08.88), Claims; page 1, lower right column, lines 5 to 10; page 3, upper right column, line 17 to lower left column, line 10; page 3, lower left column, line 20 to lower right column, line 2; page 4, upper right column, lines 10 to 13; page 5, lower left column, line 5 to lower right column, line 3<br>& US 5066771 A | 1-16 |
| A | JP 10-279714 A (Toray Industries, Inc.), 20 October, 1998 (20.10.98), Claims 1 to 5; Par. Nos. [0034], [0036]<br>(Family: none) | 1-16 |
| A | US 6136949 A (The Dow Chemical Co.), 24 October, 2000 (24.10.00), Claims<br>(Family: none) | 1-16 |

Form PCT/ISA/210 (continuation of second sheet) (April 2005)

**INTERNATIONAL SEARCH REPORT**

International application No.
PCT/JP2007/053122

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-188916 A (Teijin Ltd.), 22 July, 1997 (22.07.97), Par. Nos. [0004] to [0006] (Family: none) | 1-16 |
| A | JP 8-311715 A (Teijin Ltd.), 26 November, 1996 (26.11.96), Claims; Par. Nos. [0005], [0020], [0024], [0026], [0036] (Family: none) | 1-16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Journal of Polymer Science: Part A: Polymer Chemistry,* 1992, vol. 30, 1111-1122